(19) Europäisches Patentamt
European Patent Office
Office européen des brevets

(11) Publication number: 0 320 736 A2

# (12) EUROPEAN PATENT APPLICATION

(21) Application number: 88120260.0

(22) Date of filing: 05.12.88

(51) Int. Cl.4: C08G 18/32 , C08G 18/65

(30) Priority: 14.12.87 US 132522

(43) Date of publication of application: 21.06.89 Bulletin 89/25

(84) Designated Contracting States: DE ES FR GB IT SE

(71) Applicant: MOBAY CORPORATION
Patent Department Mobay Road
Pittsburgh Pennsylvania 15205-9741(US)

(72) Inventor: Dewhurst, John E.
220 Winslow Drive
Oakdale, PA 15071(US)

(74) Representative: Weber, Gerhard, Dr. et al
c/o BAYER AG Konzernverwaltung RP
Patentabteilung
D-5090 Leverkusen, Bayerwerk(DE)

## (54) Novel hydroxyl-group containing material and a process for preparing a molded part.

(57) The present invention is directed to a novel hydroxyl-group containing material, and the use thereof in the RIM process. More particularly, the present invention is directed to a hydroxyl-group containing material comprising the reaction product of

a) an isocyanate group containing material having an isocyanate group content of from about 0.5 to about 8% by weight produced by reacting

i) an organic di- and/or polyisocyanate, and

ii) an organic hydroxyl-group containing material having from 1 to 8 hydroxyl groups and having a molecular weight of from about 1800 to about 10,000 and

b) a sufficient amount of a hydroxyl-group containing amine to react with all the isocyanate groups of component a), said amine characterized as (i) containing from 2 to 8 hydroxyl groups, (ii) containing at least one tertiary amine group, (iii) containing no primary amino groups, and (iv) having a molecular weight of from about 120 to about 1000. The hydroxyl functional materials of the present invention are characterized by a relatively low viscosity, which renders them eminently suitable for the RIM process. Additionally, when used in the RIM process, the materials of the present invention are auto-catalytic because of the presence of the tertiary amine groups. The materials yield product having excellent green strength and increased flex modulus.

EP 0 320 736 A2

# NOVEL HYDROXYL-GROUP CONTAINING MATERIAL AND A PROCESS FOR PREPARING A MOLDED PART

## BACKGROUND OF THE INVENTION

The present invention is directed to novel hydroxyl-group containing materials and the use thereof in a RIM process.

Reaction injection molding (RIM) has become an important process for the fabrication of external automotive body parts and other industrial moldings. The RIM process is a so-called "one-shot" process which requires the intimate mixing of a polyisocyanate component and an isocyanate-reactive component followed by the injection of this mixture into a mold for subsequent rapid curing. The polyisocyanate component is generally based on a liquid polyisocyanate. The isocyanate-reactive component contains a high molecular weight isocyanate-reactive component, usually a polyol, and optionally a chain extender containing amino or hydroxyl groups. U.S. Patent No. 4,269,945 discloses a specific chain extender which contains an aliphatic amine-containing compound having at least one primary amino group such as an aminated polyoxypropylene glycol, and either a hydroxyl-containing compound free of aliphatic amine hydrogen atoms or an aromatic amine hydrogen-containing compound which is free of aliphatic amine. U.S. Patent No. 4,218,543 discloses a chain extender which is miscible with the polyol component and is based on compounds containing sterically hindered amino groups such as 1-methyl-3,5-diethyl-2,4-diamino benzene, 1-methyl-3,5-diethyl-2,6-diamino benzene or mixtures thereof.

While products produced by the RIM process have excellent physical properties, the use of the RIM process has been limited by the necessity to spray external mold release agents onto the mold surface before each shot or every several shots. The molding of standard molding compositions without such an external release agent results in parts that are torn, distorted or otherwise damaged because of the adhesion of the molded part to the mold surface. Several attempts have been made to formulate reaction components which contain an internal mold release agent so that the need to repeatedly apply external mold release agents to the mold surface would either be eliminated or diminished.

More recently, zinc stearate has been described as an effective internal mold release agent for the RIM process (see, e.g, U.S. 4,519,965).

Hydroxy functional materials which contain urethane groups are known (see, e.g., U.S. Patents 4,452,924 and 4,546,122). Also known are hydroxyl functional materials which contain both urethane groups and tertiary amine groups (see, e.g., U.S. Patents 3,049,514, 3,823,118 and 4,528,319).

U.S. 3,049,514 describes an ordered hydroxy-terminated, tertiary-nitrogen-containing polyether-based urethane produced by first reacting one mole of polypropylene ether glycol having a molecular weight of no more than 1000, with two moles of a diisocyanate, and thereafter reacting one mole of the resultant product with two moles of a tertiary-nitrogen containing polyol. The resultant hydroxy functional materials are described as being useful as bodying agents for urethane coatings.

U.S. Patent 3,823,118 describes a thermo-settable urethane prepared by first reacting more than one mole of a diisocyanate with one mole of a diol. The resultant isocyanate terminated product is then reacted with a material which contains at least one tertiary amine and at least three hydroxyl groups. The products are described as being useful for urethane coatings.

U.S. Patent 4,528,319 describes a thixotropic additive for a urethane coating. The thixotrope is described as being prepared by first reacting a polyether polyol with a stoichiometric excess of an isocyanate, and thereafter reacting the isocyanate terminated product with an ethanolamine. Although the reference apparently requires the formation of urea groups, one of the ethanolamines described is triethanolamine.

## DETAILED DESCRIPTION OF THE INVENTION

The present invention is directed to a novel hydroxyl-group containing material, and the use thereof in the RIM process. More particularly, the present invention is directed to a hydroxyl-group containing material comprising the reaction product of

a) an isocyanate group containing material having an isocyanate group content of from about 0.5 to about 8% by weight produced by reacting

i) an organic di- and/or polyisocyanate, and

ii) an organic hydroxyl-group containing material having from 1 to 8 hydroxyl groups and having a molecular weight of from about 1800 to about 10,000 and

b) a sufficient amount of a hydroxyl-group containing amine to react with all the isocyanate groups of component a), said amine characterized as (i) containing from 2 to 8 hydroxyl groups, (ii) containing at least one tertiary amine group, (iii) containing no primary amino groups, and (iv) having a molecular weight of from about 120 to about 1000.

The present invention is also directed to a process for preparing a molded part via the RIM process by reacting an isocyanate, one or more high molecular weight active hydrogen containing materials and one or more low molecular weight active hydrogen containing materials, in a closed mold characterized in that said high molecular weight active hydrogen containing material comprises

a) an isocyanate group containing material having an isocyanate group content of from about 0.5 to about 8% by weight produced by reacting

i) an organic di- and/or polyisocyanate, and

ii) an organic hydroxyl-group containing material having from 1 to 8 hydroxy groups and having a molecular weight of from about 1800 to about 10,000, and

b) a sufficient amount of a hydroxyl-group containing amine to react with all the isocyanate groups of component a), said amine characterized as (i) containing from 2 to 8 hydroxyl groups, (ii) containing at least one tertiary amine group, (iii) containing no primary amine groups, and (iv) having a molecular weight of from about 120 to about 1000.

The hydroxyl functional materials of the present invention are characterized by a relatively low viscosity, which renders them eminently suitable for the RIM process. Additionally, when used in the RIM process, the materials of the present invention are auto-catalytic because of the presence of the tertiary amine groups. The materials yield product having excellent green strength and increased flex modulus.

The isocyanate group containing material (a) is produced by reacting an organic di- and/or polyisocyanate with an organic hydroxyl-group containing material.

In producing component a), substantially any organic polyisocyanate may be used. Aliphatic, cyclo aliphatic, araliphatic, aromatic and heterocyclic polyisocyanates may be used. Examples of suitable polyisocyanates are described by W. Siefken in Justus Liebigs Annalen der Chemie, 562, pages 75 to 136. Among the polyisocyanates described therein are those corresponding to the general formula

$Q(NCO)_n$

wherein

n represents 2-4, preferably 2; and

Q represents an aliphatic hydrocarbon radical containing from 2 to 18 (preferably from 6 to 10) carbon atoms, a cycloaliphatic hydrocarbon radical containing from 4 to 15 (preferably from 5 to 10) carbon atoms, an aromatic hydrocarbon radical containing from 6 to 15 (preferably from 6 to 13) carbon atoms; or an araliphatic hydrocarbon radical containing from 8 to 15 (preferably from 8 to 13) carbon atoms.

Examples of compounds corresponding to this formula include ethylene diisocyanate; 1,4-tetramethylenediisocyanate; 1,6-hexamethylene diisocyanate, 1,12-dodecane diisocyanate, cyclobutane-1,3-diisocyanate; cyclohexane-1,3- and 1,4-diisocyanate and mixtures of these isomers; 1-isocyanato-3,3,5-trimethyl-5-isocyanatomethyl cyclohexane (German Auslegeschrift No. 1,202,785, U.S. Pat. No. 3,401,190); 2,4- and 2,6-hexahydrotolylene diisocyanate and mixtures of these isomers; hexahydro-1,3- and/or 1,4-phenylene diisocyanate; perhydro-2,4′- and/or 4,4′-diphenyl methane diisocyanate; 1,3- and 1,4-phenylene diisocyanate; 2,4-and 2,6-tolylene diisocyanate and mixtures of these isomers; diphenyl methane-2,4′- and/or -4,4′-diisocyanate; and naphthylene-1,5-diisocyanate.

Other examples of suitable polyisocyanates are: triphenyl methane-4,4′,4″-triisocyanate, polyphenyl polymethylene polyisocyanates of the type obtained by condensing aniline with formaldehyde followed by phosgenation (described in British Pat. Nos. 874,430 and 848,671); m- and p-isocyanatophenyl sulfonyl isocyanates (U.S. Pat. No. 3,277,138); polyisocyanates containing carbodiimide groups (German Pat. No. 1,092,007 (U.S. Pat. No. 3,152,162) and German Offenlegungsschriften Nos. 2,504,400; 2,537,685 and 2,552,350); norbornane diisocyanates (U.S. Pat. No. 3,492,330); polyisocyanates containing allophanate groups (British Pat. No. 994,890, Belgian Pat. No. 761,626 and Dutch patent application No. 7,102,524); polyisocyanates containing isocyanurate groups (U.S. Pat. No. 3,001,973); German Pat. Nos. 1,022,789; 1,222,067 and 1,027,394 and German Offenlegungsschriften Nos. 1,929,034 and 2,004,048);

polyisocyanates containing urethane groups (Belgian Pat. No. 752,261, U.S. Pat. Nos. 3,394,164 and 3,644,457); polyisocyanates containing acylated urea groups (German Pat. No. 1,230,778); polyisocyanates containing biuret groups (U.S. Pat. Nos. 3,124,605 and 3,201,372, British Pat. No. 889,050); polyisocyanates produced by telomerization reactions (U.S. Pat. No. 3,654,106); polyisocyanates containing ester groups (British Pat. Nos. 965,474 and 1,072,956, U.S. Pat. No. 3,567,763 and German Pat. No. 1,231,688); reaction products of the above-mentioned diisocyanates with acetals (German Pat. No. 1,072,385) and polyisocyanates containing polymeric fatty acid esters (U.S. Pat No. 3,455,883). It is also possible to use the isocyanate group containing distillation residues obtained commercial production of isocyanates, optionally in solution in one or more of the above-mentioned polyisocyanates. It is also possible to use mixtures of the above-mentioned polyisocyanates.

It is generally preferred that the commercially available polyisocyanates be used in the present invention. Such readily available materials include 2,4- and 2,6-tolylene diisocyanate, also mixtures of these isomers ("TDI"); polyphenyl polymethylene polyisocyanates of the type obtained by condensing aniline with formaldehyde, followed by phosgenation ("crude MDI"); and polyisocyanates containing carbodiimide groups, urethane groups, allophanate groups, isocyanurate groups, urea groups or biuret groups ("modified polyisocyanates").

In producing component a), substantially any organic compound containing one or more and preferably two or more hydroxyl groups and having molecular weights of from about 1800 to about 10,000, preferably from about 2000 to about 6,000, and most preferably from about 4000 to about 6000. The functionality of the hydroxyl-group containing compound is preferably from 2 to 8, and most preferably is 2 to 4. Preferred compounds include polyesters, polyethers, polythioethers, polyacetals, polycarbonates and polyester amides containing an average of more than 2, and preferably from 2 to 4 hydroxyl groups.

Polyesters containing hydroxyl groups suitable for the present invention are reaction products of polyhydric alcohols with polybasic carboxylic acids. Instead of using the free polycarboxylic acids, it is also possible to use the corresponding polycarboxylic acid anhydrides or corresponding polycarboxylic acid esters of lower alcohols or mixtures thereof to produce the polyesters. The polycarboxylic acids may be aliphatic, cycloaliphatic, aromatic and/or heterocyclic and may optionally be substituted (for example by halogen atoms) and/or may be unsaturated.

Examples of suitable carboxylic acids and derivatives thereof are succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, glutaric acid anhydride, maleic acid, maleic acid anhydride, fumaric acid, dimerized and trimerized unsaturated fatty acids (optionally in admixture with monomeric unsaturated fatty acids, such as oleic acid) terephthalic acid dimethylester and terephthalic acid-bis-glycol ester. Suitable polyhydric alcohols include: ethylene glycol 1,2- and 1,3-propylene glycol, 1,4- and 2,3-butylene glycol, 1,6-hexane diol, 1,8-octane diol, neopentyl glycol, 1,4-bis-hydroxymethyl-cyclohexane, 2-methyl-1,3-propane diol, glycerol, trimethylol propane, 1,2,6-hexane triol, 1,2,4-butane triol, trimethylol ethane, pentaerythritol, quinitol, mannitol, sorbitol, formitol, methyl glycoside, diethylene glycol, triethylene glycol, tetraethylene glycol and higher polyethylene glycols, dipropylene glycol and higher polypropylene glycols, dibutylene glycol and higher polybutylene glycols. The polyesters may contain terminal carboxyl groups. Polyesters of lactones (for example, ε-caprolactone) or of hydroxy carboxylic acids (for example, ω-hydroxy caproic acid) may also be used.

The polyethers suitable for use in accordance with the present invention are known to those in the art. These polyethers may be obtained by polymerizing epoxides, such as ethylene oxide, propylene oxide, butylene oxide, tetrahydrofuran, styrene oxide, or epichlorohydrin in the presence of Lewis catalysts, such as $BF_3$. Polymerization may also be accomplished by the addition of epoxides (preferably ethylene oxide and propylene oxide) either in admixture or successively, to compounds containing reactive hydrogen atoms such as water, ammonia, alcohols or amines. Examples of such reactive hydrogen-containing compounds are ethylene glycol, 1,3-propylene glycol, 1,2-propylene glycol, trimethylol propane, glycerol, sorbitol, 4,4′-dihydroxy diphenyl propane, aniline, ethanolamine and ethylene diamine. Sucrose polyethers of the type described in German Auslegeschriften Nos. 1,176,358 and 1,064,938 and formitol or formose-started polyethers (German Offenlegungsschriften Nos. 2,639,083 and 2,737,951) may also be used in accordance with the present invention. In many cases, it is preferred to use polyethers which contain predominantly primary OH-groups (up to 90% by weight, based on all the OH-groups present in the polyether). Polybutadienes containing OH-groups are also suitable to the present invention.

Among the polythioethers which may be employed as the high molecular weight isocyanate reactive compounds, the condensation products of thiodiglycol on its own and/or with other glycols, dicarboxylic acids, formaldehyde, aminocarboxylic acids or amino alcohols are preferred. These condensation products include polythio mixed ethers, polythioether esters or polythioether ester amides.

Polyacetals which may be used in the present invention include the compounds obtained by reacting glycols (such as diethylene glycol, triethylene glycol, 4,4′-dioxethoxy diphenyl dimethyl methane and hexane diol) with formaldehyde. Other polyacetals suitable to the present invention may be obtained by polymerizing cyclic acetals, such as trioxane (German Offenlegungsschrift No. 1,694,128).

Suitable polycarbonates containing hydroxyl groups are known to those in the art. Such polycarbonates may be obtained by reacting diols (such as 1,3-propane diol, 1,4-butane diol and/or 1,6-hexane diol, diethylene glycol, triethylene glycol, tetra ethylene glycol or thiodiglycol) with diaryl carbonates (for example diphenyl carbonate) or with phosgene (German Auslegeschriften Nos. 1,694,080; 1,915,908 and 2,221,751; German Offenlegungsschrift No. 2,605,024).

The polyester amides and polyamides suitable to the present invention include the predominantly linear condensates obtained from polybasic carboxylic acids or anhydrides thereof and polyhydrio amino alcohols, diamines, higher polyamines and mixtures thereof.

Polyhydroxyl compounds containing urethane or urea groups, optionally modified natural polyols (such as castor oil), and carbohydrates (for example starch), may also be used as the isocyanate reactive compound of the present invention. Addition products of alkylene oxides with phenol/formaldehyde resins or with urea/formaldehyde resins may also be used.

The above-mentioned polyhydroxyl compound may be modified in various ways. One such modification consists in reacting the polyhydroxyl compound with a subequivalent amount of a monoisocyanate such as phenyl isocyanate to yield a urethane-modified polyol. Preferably higher than difunctional polyols are used for this modification and the amount of monoisocyanate being such that the modified polyol still contains at least two unreacted hydroxy groups. Another such modification (described in German Offenlegungsschriften Nos. 2,210,839 (U.S. Pat. No. 3,849,515) and 3,544,195) is accomplished by etherification of a mixture of different polyhydroxyl compounds (for example, a polyether polyol and a polyester polyol) in the presence of a strong acid to form a relatively high molecular weight polyol which is made up of different segments attached through ether and ester bridges. Amide groups may be introduced into the polyhydroxyl compounds by the procedure disclosed in German Offenlegungsschrift No. 2,559,372. Triazine groups may be introduced in the polyhydroxyl compounds by reacting the polyhydroxyl compounds with poly functional cyanic acid esters (German Offenlegungsschrift No. 2,620,487). The reaction of a polyol with a less than equivalent quantity of a diisocyanato-carbodiimide, followed by reaction of the carbodiimide group with an amine, amide, phosphite or carboxylic acid, gives polyhydroxyl compounds containing guanidine, phosphonoformamide or acyl urea groups (German Offenlegungsschriften Nos. 2,714,289; 2,714,292 and 2,714,293).

According to the present invention, it is also possible to use polyhydroxyl compounds containing high molecular weight polyadducts and polycondensates or polymers in finely dispersed or dissolved form. Such polyhydroxyl compounds may be obtained by polyaddition reactions (for example, reactions between polyisocyanates and aminofunctional compounds), and polycondensation reactions (for example, between formaldehyde and phenols and/or amines) in situ in the above-mentioned compounds containing hydroxyl groups. Such processes are described in German Auslegeschriften Nos. 1,168,075; 1,260,142; and in German Offenlegungsschriften Nos. 2,324,134; 2,423,984; 2,512,385; 2,513,815; 2,550,796; 2,550,797; 2,550,833; 2,550,862; 2,633,293 and 2,639,254. It is also possible to obtain such a polyhydroxyl compound by mixing an aqueous polymer dispersion with a polyhydroxyl compound and subsequently removing the water from the mixture (U.S. Pat. No. 3,869,413 or German Offenlegungsschrift No. 2,550,860).

Polyhydroxyl compounds modified by vinyl polymers obtained by polymerizing styrene and acrylonitrile in the presence of polyethers (U.S. Pat. Nos. 3,383,351; 3,304,273; 3,523,093 and 3,110,695; German Auslegeschrift No. 1,152,536) or polycarbonate polyols (German Pat. No. 1,769,795; U.S. Pat. No. 3,637,909) are also suitable for use in the process according to the present invention. Plastics having particularly low combustibility are obtained by using polyether polyols modified by graft polymerization with vinyl phosphonic acid esters and, optionally, (meth)-acrylonitrile, (meth)-acrylamine or OH-functional (meth)-acrylic acid esters (German Offenlegungsschriften Nos. 2,442,101; 2,644,922 and 2,646,141). Polyhydroxyl compounds into which carboxyl groups have been introduced by radical graft polymerization with unsaturated carboxylic acids and, optionally, other olefinically unsaturated monomers (German offenlegungsschriften Nos. 2,714,291; 2,739,620 and 2,654,746) are particularly advantageous when used in combination with mineral fillers.

The isocyanate and polyol are reacted in quantities such that the resultant product has an isocyanate group content of from about 0.5 to about 8 percent by weight, preferably from about 0.8 to about 3 percent by weight, and most preferably from about 1 to about 2 percent by weight. In the case where the isocyanate and polyol are reacted in a 1:1 equivalent ratio, the polyol cannot contain highly catalytic functional groups (such as tertiary amine groups) since they may prevent control of the final isocyanate

group content.

Once component a) is prepared, the resultant product is then reacted with a sufficient amount of a hydroxyl-group containing amine to react with all the isocyanate groups of component a). The amine is characterized as containing (i) from 2 to 8 hydroxyl groups, (ii) at least one tertiary amine group, and (iii) no primary amine groups. It is preferred that the amine contain from 2 to 6 hydroxy groups. It is also preferred that the amine contain no secondary amine group. Finally, the amine should have a molecular weight of from about 120 to about 1000. Useful amines include triethanolamine, any of the tertiary amine/hydroxyl group materials described in U.S. Patents 3,049,514 and 3,823,118, the disclosures of which are herein incorporated by reference, N-phenyl - or N-methyl-diethanolamine, and any other tertiary amine meeting the conditions noted above.

The amine is reacted with the component a) in an amount sufficient to react with all the isocyanate groups of component a). If desired an excess of the amine can be used.

As noted above, the polyols of the present invention are eminently suitable for use in the RIM process. Typical parameters and materials useful in the RIM process are described in U.S. 4,218,543, and 4,519,965 the disclosures of which are herein incorporated by reference. One particularly interesting finding is that when the amine used is one prepared from ethylene diamine and propylene oxide, zinc stearate is soluble in the final product itself, and there is no need to use additional solubilizers (cf. e.g, U.S. 4,519,965).

The invention is further illustrated but is not intended to be limited by the following examples in which all parts and percentages are by weight unless otherwise specified.

In the examples, the following materials were used:

## I. HYDROXYL-GROUP CONTAINING MATERIALS

(Component a)ii)):

a) POLYOL A: a polyether diol having a molecular weight of about 4000 and prepared by reacting propylene glycol sequentially first with propylene oxide and then with ethylene oxide, the weight ratio of propylene oxide to ethylene oxide being about 4:1.

b) POLYOL B: a polyether triol having a molecular weight of about 4800 and prepared by reacting glycerine sequentially first with propylene oxide and then with ethylene oxide, the weight ratio of propylene oxide to ethylene oxide being about 7:1.

c) POLYOL C: a polyether triol having a molecular weight of about 6000 and prepared by reacting glycerine sequentially first with propylene oxide and then ethylene oxide, the weight ratio of propylene oxide to ethylene oxide being about 7:1.

d) POLYOL D: a polyether triol having a molecular weight of about 3000 and prepared by reacting glycerine and propylene oxide.

e) POLYOL E: a polyether triol having a molecular weight of about 6000 and prepared by reacting glycerine sequentially first with propylene oxide and then with ethylene oxide, the weight ratio of propylene oxide to ethylene oxide being about 5:1.

f) POLYOL F: a dispersion having an OH number of about 28 and consisting of a polyhydrazodicarbonamide in a glycerine initiated propylene oxide/ethylene oxide polyether having an OH number of 35, and produced by reacting toluene diisocyanate and hydrazine hydrate in the presence of the polyether according to U.S. Patent 4,042,537. The dispersion has a solids content of 20 percent by weight.

g) POLYOL G: a polyether diol having a molecular weight of about 2000 and prepared by reacting propylene glycol and propylene oxide.

h) POLYOL H: Permapol P-855, a polythioether polyol available from Products Research and Chemical Corporation, and having an hydroxyl number of about 35, a molecular weight of about 3200, and a sulfur content of about 30% by weight.

i) POLYOL I: Terathane 2900, a polyether glycol available from DuPont, and having a molecular weight of about 2900.

j) POLYOL J: Niax 3428, a polymer polyol available from Union Carbide, having an OH number of about 28.

k) POLYOL K: Tone 0240 polyol, a polycaprolactone diol available from Union Carbide, and having a molecular weight of about 2000.

l) POLYOL L: a polyether triol having a molecular weight of about 4800 and prepared by reacting glycerine sequentially first with propylene oxide and then ethylene oxide, the weight ratio of propylene oxide to ethylene oxide weight about 5:1.

II. HYDROXYL- GROUP CONTAINING AMINE (Component b)):

a) ACP-A: triethanolamine
b) ACP-B: N-methyldiethanolamine
c) ACP-C: Ethomeen S/12: bis(2-hydroxyethyl) soyaamine having a molecular weight of 352 and available from Armak Company. The Ethomeen family of tertiary amines have the basic structure

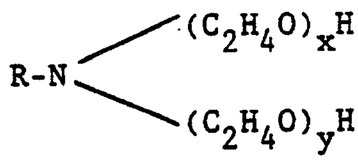

where R is a $C_{12}$ to $C_{18}$ fatty alkyl group and x + y is from 2 to 50.
d) ACP-D: Ethoduomeen T/13: N,N′,N′-tris(2-hydroxyethyl)-N-tallow-1,3-propanediamine having a molecular weight of 470 and available from Armak Company.
e) ACP-E: monoethanolamine propoxylated to an OH number of 700.
f) ACP-F: 1,2-diaminoethane propoxylated to an OH number of 630.
g) ACP-G: N,N-dimethyl-1,3-propane diamine propoxylated to an OH number of 296.
h) ACP-H: N,N-diethyl-1,2-diaminoethane propoxylated to an OH number of 407.
i) ACP-I: 1,2-diaminoethane propoxylated to an OH number of 470.
j) ACP-J: ortho-toluene diamine ethoxylated, then propoxylated with an OH number of about 395, with the weight ratio of ethylene oxide to propylene oxide of about 1:2.
k) ACP-K: 3-(1-morpholino)-1,2-propane diol.
l) ACP-L: an 80% 2,4-toluene diamine/20% 2,6-toluene diamine mixture ethoxylated and then propoxylated with an OH number of about 470 with the weight ratio of ethylene oxide to propylene oxide being about 1:1.
m) ACP-M: Ethomeen S/15: a polyoxyethylene(s) soyaamine having a molecular weight of 484 and available from Armak Company.
n) ACP-N: Ethomeen 18/12: bis(2-hydroxy-ethyl) octadecylamine having a molecular weight of 357 and available from Armak Company.
o) ACP-O: N-phenyldiethanolamine
p) ACP-P: Fyrol-6: N,N,-bis(2-hydroxyethyl) aminomethyldiethyl phosphonate having a molecular weight of 255 and available from Stauffer Chemical Company.
q) ACP-Q: ortho-toluenediamine ethoxylated, then propoxylated to an OH number of 450.
r) ACP-R: Propoduomeen T/13: N,N,N′-tris (2-hydroxypropyl)-N′-tallow-1,3-diaminopropane available from Armak Company.

III. ISOCYANATES

a) ISO A: isophorone diisocyanate.
b) ISO-B: 2,4-toluene diisocyanate.
c) ISO-C: an 80/20 mixture of 2,4- and 2,6-toluene diisocyanate.
d) ISO-D: a commercially available polyphenylpolymethylene polyisocyanate known as MONDUR MRS available from Mobay Corporation, having a diisocyanate content of 47% by weight and an isocyanate group content of 31.8% by weight.
e) ISO-E: 4,4-methylene bis(cyclohexyl isocyanate).
f) ISO-F: a modified isocyanate prepared by reacting methylene bis(phenyl isocyanate) with tripropylene glycol and having an isocyanate group content of about 23% by weight.
g) ISO-G: a modified methylene bis(phenyl isocyanate) containing carbodiimide groups having an isocyanate group content of about 29.3% by weight.

h) ISO-H: 4,4′-methylene bis(phenylisocyanate).

i) ISO-I: an equimolar mixture of 2,4′- and 4,4′-methylene bis(phenylisocyanate).

j) ISO-J: a polyphenylpolymethylene polyisocyanate having a diisocyanate content of about 78% by weight and having an isocyanate group content of 32.9% by weight.

k) ISO-K: a polyphenylpolymethylene polyisocyanate known as MONDUR MRS 10, available from Mobay Corporation and having a diisocyanate content of about 61% by weight and an isocyanate group content of 32.2% by weight.

l) ISO-L: the reaction product of about 45 parts by weight of ISO-H, about 11 parts by weight of ISO-K, and about 44 parts by weight of POLYOL F, having an isocyanate group content of 17.7% by weight.

In the Examples, all viscosities are reported in the units "mPa.s".

## EXAMPLES

### SYNTHESIS EXAMPLES 1-11

2000 parts of POLYOL A was reacted with 222.2 parts of ISO-A at 120°C until an NCO content of 2% was obtained. Subsequently to 100 parts of this prepolymer at 60°C were added the hydroxyl-group containing amines listed in Table 1 to yield a variety of useful prepolymer polyols. The capping reaction was complete when no NCO could be detected by infrared spectroscopy.

TABLE 1

| EXAMPLES 1-11 | | | |
|---|---|---|---|
| Example | OH-Amine | Parts added to 100 Parts of Prepolymer | Viscosity at 60°C |
| 1 | ACP-A | 6.71 | 6250 |
| 2 | ACP-B | 5.36 | 10,333 |
| 3 | ACP-C | 15.84 | 3750 |
| 4 | ACP-D | 21.15 | 6050 |
| 5 | ACP-D | 19.35 | 7800 |
| 6 | ACP-D | 17.55 | 8550 |
| 7 | ACP-D | 15.75 | 10,950 |
| 8 | ACP-E | 10.80 | 12,533 |
| 9 | ACP-F | 16.20 | 8450 |
| 10 | ACP-G | 17.06 | 5350 |
| 11 | ACP-H | 12.42 | 3000 |

### SYNTHESIS EXAMPLE 12

1000 parts of POLYOL B were reacted with 222.2 parts of ISO-A at 120°C to an NCO content of 3.2%. To 500 parts of this prepolymer was added 96.6 parts of ACP-C. When no NCO band could be detected by infrared spectroscopy, the viscosity at 60°C was measured to be 20,267.

### EXAMPLE 13

To 850 parts of the POLYOL B/ISO-A prepolymer (3.2% NCO) from Example 12 were added 55.6 parts of ACP-B at 80°C. When no NCO band could be detected by infrared spectroscopy, a viscosity of 58,067 at 60°C was measured.

SYNTHESIS EXAMPLES 14-17

480 parts of POLYOL B was reacted with 11.9 parts of phenyl isocyanate at 80 °C until no NCO band could be detected by infrared spectroscopy. To this was added 44.4 parts of ISO-A and this mixture was heated at 120 °C until an NCO content of 1.3% was achieved. Subsequently, to 120 parts of this prepolymer at 60 °C was added each of the hydroxyl-group containing amines listed in Table 2 to yield a variety of useful prepolymer polyols. The capping reaction was complete when no NCO could be detected by infrared spectroscopy.

TABLE 2

| EXAMPLES 12-15 | | | |
|---|---|---|---|
| Example | OH-Amine | Parts of OH-Amine per 120 Parts Prepolymer | Viscosity at 60 °C |
| 14 | ACP-A | 6.6 | 16,000 |
| 15 | ACP-D | 20.9 | 22,000 |
| 16 | ACP-E | 10.7 | 7000 |
| 17 | ACP-F | 16.0 | 21,000 |

SYNTHESIS EXAMPLES 18-21

480 parts of POLYOL B were reacted with 11.9 parts of phenyl isocyanate at 80 °C until the NCO band from the infrared spectrum disappeared. To this was added 34.8 parts of ISO-B. Heating at 80 °C continued until the NCO content was 1.7%. To 125 parts of this prepolymer at 60 °C was added each of the hydroxyl-group containing amines in Table 3. Completion of each capping reaction was indicated by the disappearance of an NCO band in the infrared spectrum.

TABLE 3

| EXAMPLES 18-21 | | | |
|---|---|---|---|
| Example | OH-Amine | Parts OH-Amine per 125 Parts of Prepolymer | 60 °C Viscosity |
| 18 | ACP-A | 7.1 | 13,000 |
| 19 | ACP-D | 22.3 | 10,000 |
| 20 | ACP-E | 11.4 | 12,000 |
| 21 | ACP-F | 17.1 | 37,500 |

SYNTHESIS EXAMPLES 22-25

600 parts of POLYOL C was reacted with 29.6 parts of 1-octadecyl isocyanate at 100 °C until no NCO band could be detected in the infrared spectrum. To this was added 44.4 parts of ISO-A. This was heated at 120 °C until the NCO content reached 1.1%. Subsequently, to 150 parts of this prepolymer at 60 °C was added each of the hydroxyl-group containing amines in Table 4 to yield a variety of useful prepolymer polyols. The capping reaction was judged to be done when no NCO band could be detected by infrared spectroscopy.

TABLE 4

| EXAMPLES 22-25 | | | |
|---|---|---|---|
| Example | OH-Amine | Parts of OH-Amine per 150 Parts of Prepolymer | Viscosity at 60°C |
| 22 | ACP-A | 6.6 | 9000 |
| 23 | ACP-D | 20.9 | 17,000 |
| 24 | ACP-E | 10.7 | 7000 |
| 25 | ACP-F | 16.0 | 16,000 |

SYNTHESIS EXAMPLES 26-31

6000 parts of POLYOL C was reacted with 119 parts of phenyl isocyanate at 115°C until no NCO band could be detected in the infrared spectrum. To this was added 444 parts of ISO-A. This mixture was heated at 90°C with 0.6 parts of solid DABCO (triethylenediamine) to an NCO content of 1.22%. Subsequently to 200 parts of this prepolymer was added each of the hydroxyl-group containing amines listed in Table 5 at 60°C. The capping reaction was judged to be completed when no NCO could be detected in the infrared spectrum.

TABLE 5

| EXAMPLES 26-31 | | | |
|---|---|---|---|
| Example | OH-Amine | Parts of OH-Amine per 200 Parts of Prepolymer | Viscosity at 60°C |
| 26 | ACP-A | 9.08 | 11,333 |
| 27 | ACP-D | 28.65 | 18,200 |
| 28 | ACP-E | 14.63 | 10,133 |
| 29 | ACP-I | 29.1 | 18,750 |
| 30 | ACP-J | 33.5 | 17,025 |
| 31 | ACP-K | 9.8 | 8500 |

SYNTHESIS EXAMPLES 32-35

600 parts of POLYOL C was reacted with 29.6 parts of 1-octadecyl isocyanate at 80°C until no NCO band could be detected in the infrared spectrum. To this was added 34.8 parts of ISO-B. This mixture was heated to 80°C for 3 hours to yield an NCO content of 1.36%. Subsequently to 150 parts of this prepolymer at 60°C were added each of the hydroxyl-group containing amines in Table 6 to yield useful prepolymer polyols. The capping reaction was judged to be complete when no NCO band could be detected in the infrared spectrum.

TABLE 6

| EXAMPLES 32-35 | | | |
|---|---|---|---|
| Example | OH-Amine | Parts OH-Amine per 150 Parts of Prepolymer | Viscosity at 60° C |
| 32 | ACP-A | 6.7 | 8750 |
| 33 | ACP-D | 21.2 | 10,250 |
| 34 | ACP-E | 10.8 | 9000 |
| 35 | ACP-F | 16.3 | 21,250 |

SYNTHESIS EXAMPLES 36-39

600 parts of POLYOL C was reacted with 11.9 parts of phenyl isocyanate at 80° C until no NCO band could be detected in the infrared spectrum. 34.8 parts of ISO-B were added and the mixture heated for 3 hours at 80° C to an NCO content of 1.3%. Subsequently to 150 parts of this prepolymer at 60° C were added each of the hydroxyl-group containing amines listed in Table 7. The capping reaction was judged to be done when no NCO band could be detected in the infrared spectrum.

TABLE 7

| EXAMPLES 36-39 | | | |
|---|---|---|---|
| Example | OH-Amine | Parts OH-Amine per 150 Parts of Prepolymer | 60° C Viscosity |
| 36 | ACP-A | 6.9 | 6933 |
| 37 | ACP-D | 21.8 | 5400 |
| 38 | ACP-E | 11.1 | 8133 |
| 39 | ACP-F | 16.7 | 12,600 |

SYNTHESIS EXAMPLES 40-51

6000 parts of POLYOL C were reacted with 119 parts of phenyl isocyanate at 115° C until no NCO band could be detected in the infrared spectrum. 1000 parts of this polyol was reacted with 56.9 parts of ISO-B at 80° C to an NCO content of 1.1% for Examples 40-43. A second 1000 parts was reacted with 71.1 parts of ISO-B at 80° C to an NCO content of 1.8% for Examples 44-47 and a third 1000 parts was reacted with 85.3 parts of ISO-B at 20° C to an NCO content of 2.4% for Examples 48-51. 200 parts of each of these prepolymers were capped with various levels of ACP-E. The results are summarized in Table 8.

TABLE 8

| EXAMPLES 40-51 | | | | |
|---|---|---|---|---|
| Example | % NCO of Prepolymer | Parts of ACP-E per 200 Parts Prepolymer | Viscosity at 60° C | Viscosity at 25° C |
| 40 | 1.1 | 12.4 | 8875 | 84,667 |
| 41 | 1.1 | 14.8 | 6750 | 74,067 |
| 42 | 1.1 | 17.3 | 5375 | 53,467 |
| 43 | 1.1 | 19.8 | 4750 | 43,133 |
| 44 | 1.8 | 18.3 | 6750 | 105,333 |
| 45 | 1.8 | 22.0 | 4750 | 60,000 |
| 46 | 1.8 | 25.6 | 3875 | 47,867 |
| 47 | 1.8 | 29.3 | 3250 | 35,667 |
| 48 | 2.4 | 24.1 | 4875 | 90,867 |
| 49 | 2.4 | 28.9 | 4875 | 68,133 |
| 50 | 2.4 | 33.7 | 4250 | 53,067 |
| 51 | 2.4 | 38.5 | 3750 | 41,533 |

SYNTHESIS EXAMPLES 52-55

2000 parts of POLYOL C were reacted with a mixture of 39.7 parts of phenyl isocyanate and 116 parts of ISO-B at 100° C to an NCO content of 1.02%.

200 parts of this prepolymer were reacted with each of the hydroxyl-group containing amines in Table 9.

TABLE 9

| EXAMPLES 52-55 | | | |
|---|---|---|---|
| Examples | OH-Amine | Parts OH-Amine per 200 Parts of Prepolymer | Viscosity at 60° C |
| 52 | ACP-A | 9.2 | 7750 |
| 53 | ACP-D | 29.1 | 8625 |
| 54 | ACP-E | 14.8 | 11,000 |
| 55 | ACP-F | 22.3 | 32,375 |

SYNTHESIS EXAMPLES 56-59

600 parts of POLYOL D was reacted with 23.8 parts of phenyl isocyanate at 80° C until no NCO band could be detected in the infrared spectrum. To this was added 69.6 parts of ISO-B. This mixture was heated at 80° C for 3 hours to yield 2.4% NCO. Subsequently to 150 parts of this prepolymer at 80° C were added each of the hydroxyl-group containing amines in Table 10. The capping reaction was judged to be complete when no NCO could be detected in the infrared spectrum.

TABLE 10

| EXAMPLES 56-59 | | | |
|---|---|---|---|
| Example | OH-Amine | Parts of OH-Amine per 150 Parts of Prepolymer | Viscosity at 60 °C |
| 56 | ACP-A | 12.9 | 13,333 |
| 57 | ACP-D | 40.7 | 8667 |
| 58 | ACP-E | 20.8 | 8400 |
| 59 | ACP-F | 31.2 | 43,600 |

SYNTHESIS EXAMPLES 60-66

900 parts of POLYOL E was reacted with 17.9 parts of phenyl isocyanate at 110 °C until no NCO band could be detected by infrared spectrum. To this was added 500 parts POLYOL G and 174 parts of ISO-B. This mixture was heated at 80 °C until an NCO content of 3.2% was obtained. Subsequently, to 150 parts of this prepolymer at 60 °C were added each of the hydroxyl-group containing amines in Table 11 to yield a variety of useful prepolymer polyols. The capping reaction was judged to be complete when no NCO band could be detected in the infrared spectrum.

TABLE 11

| EXAMPLES 60-66 | | | |
|---|---|---|---|
| Example | OH-Amine | Parts of OH-Amine per 150 Parts of Prepolymer | Viscosity at 60 °C |
| 60 | ACP-A | 17.0 | 8375 |
| 61 | ACP-D | 53.7 | 4375 |
| 62 | ACP-C | 40.2 | 2750 |
| 63 | ACP-B | 13.6 | 4500 |
| 64 | ACP-E | 27.4 | 5000 |
| 65 | ACP-F | 41.1 | 15,125 |
| 66 | ACP-L | 54.8 | 19,250 |

SYNTHESIS EXAMPLES 67-73

900 parts of POLYOL F were reacted with 17.9 parts of phenyl isocyanate. When no NCO could be detected in the infrared spectrum 500 parts of POLYOL G and 174 parts of ISO-B were added. This mixture was heated at 110 °C until the NCO content was 3.2%. Subsequently each of the hydroxyl-group containing amines in Table 12 were added to 200 parts of this prepolymer at 60 °C. The capping reaction was judged to be complete when no NCO band could be detected in the infrared spectrum.

TABLE 12

| EXAMPLES 67-73 | | | |
|---|---|---|---|
| Examples | OH-Amine | Parts OH-Amine per 200 Parts of Prepolymer | Viscosity at 60°C |
| 67 | ACP-A | 22.5 | 56,933 |
| 68 | ACP-C | 53.1 | 6867 |
| 69 | ACP-D | 70.9 | 23,367 |
| 70 | ACP-B | 17.9 | 18,333 |
| 71 | ACP-E | 36.2 | 14,333 |
| 72 | ACP-F | 54.3 | 176,933 |
| 73 | ACP-I | 53.9 | 39,400 |

SYNTHESIS EXAMPLES 74-81

2000 parts of POLYOL G were reacted with 174 parts of ISO-B at 50°C until an NCO content of 1.95% was obtained. 200 part portions of this prepolymer were capped with various levels of ACP-F. (See Table 13). In Examples 79-81 zinc stearate was predissolved in ACP-F prior to capping. Viscosities were measured once no NCO band could be detected in the infrared spectrum. All of the resulting prepolymer polyols were clear except Example 81 which became cloudy upon standing overnight at room temperature.

TABLE 13

| EXAMPLES 74-81 | | | |
|---|---|---|---|
| Example | Parts ACP-F per 200 Parts of Prepolymer | Parts Zinc Stearate | Viscosity at 25°C |
| 74 | 33.1 | 0 | 6333 |
| 75 | 29.0 | 0 | 7267 |
| 76 | 24.8 | 0 | 10,287 |
| 77 | 20.7 | 0 | 10,867 |
| 78 | 16.6 | 0 | 18,800 |
| 79 | 33.1 | 8.7 | 6667 |
| 80 | 24.8 | 8.4 | 8667 |
| 81 | 16.6 | 8.1 | 16,667 |

SYNTHESIS EXAMPLE 82

2000 parts of POLYOL A were reacted with 87 parts of ISO-B at 50°C until an NCO content of 1.06% was reached. 1646 parts of this prepolymer were reacted with 142 parts of ACP-F. The resultant prepolymer polyol had a viscosity of 12,800 at 25°C.

SYNTHESIS EXAMPLE 83

8000 parts of POLYOL A were reacted with 348 parts of ISO-B at 60°C until an NCO content of 1.09% was obtained. To this was added 1047.9 parts of a solution of 900 parts of ACP-F and 423.3 parts of zinc stearate. The capping reaction was judged to be complete when no NCO band could be detected in the infrared spectrum. The viscosity at 25°C was 12,133.

SYNTHESIS EXAMPLE 84

7000 parts of POLYOL A were reacted with 380.6 parts of ISO-B at 60°C to an NCO content of 1.29%. To this was added 1080 parts of a solution of 348.0 parts of zinc stearate in 900 parts of ACP-F. When no NCO band was detected in the infrared spectrum the viscosity at 25°C was measured to be 26,000.

SYNTHESIS EXAMPLE 85

8000 parts of POLYOL E were reacted with 348 parts of ISO-B at 60°C until an NCO content of 1.06% was obtained. To this was added with stirring 326.6 parts of zinc stearate dissolved in 720 parts of ACP-F. The capping reaction was judged to be complete when no NCO band could be detected in the infrared spectrum. The viscosity at 25°C was 23,333.

SYNTHESIS EXAMPLE 86

8000 parts of POLYOL G were reacted with 696 parts of ISO-B at 60°C until an NCO content of 1.84% was obtained. To this was added 368 parts of zinc stearate dissolved in 1440 parts of ACP-F. When no IR band could be detected for NCO, the viscosity at 25°C was 9533.

SYNTHESIS EXAMPLE 87

6400 parts of POLYOL B were reacted with 348 parts of ISO-B at 80°C until an NCO content of 1.26% was obtained. To this was added with stirring 267 parts of zinc stearate dissolved into 720 parts of ACP-F. When the NCO groups were consumed the final viscosity was 19,733 at 25°C.

SYNTHESIS EXAMPLE 88

6400 parts of POLYOL B were reacted with 348 parts of ISO-C at 60°C until an NCO content of 1.02% was obtained. To this was added with stirring 287.9 parts of zinc stearate dissolved into 720 parts of ACP-F. When no NCO could be detected by infrared spectroscopy, the viscosity at 25°C was found to be 39,267.

SYNTHESIS EXAMPLE 89

6400 parts of POLYOL B were reacted with 348 parts of ISO-C at 60°C until an NCO content of 1.31% was obtained. To this was added 720 parts of ACP-F. When the NCO was consumed, 272.9 parts of zinc stearate were dissolved into this prepolymer polyol. The final viscosity was 39,533 at 25°C.

SYNTHESIS EXAMPLE 90

8000 parts of POLYOL E were reacted with 348 parts of ISO-C at 60°C until an NCO content of 1.22% was obtained. To this was added 476 parts of ACP-E with stirring. After the NCO was consumed, the final viscosity was 14,667 at 25°C.

SYNTHESIS EXAMPLES 92-95

8000 parts of POLYOL E were reacted with 348 parts of ISO-C at 60°C until an NCO content of 1.09% was obtained. This prepolymer was capped by the hydroxyl-group containing amines shown in Table 14.

TABLE 14

| SYNTHESIS EXAMPLES 92-95 | | | |
|---|---|---|---|
| Example | OH-Amine | Parts OH-Amine per 100 Parts of Prepolymer | Viscosity at 25 °C |
| 92 | ACP-A | 3.51 | 25,533 |
| 93 | ACP-B | 2.80 | 40,400 |
| 94 | ACP-C | 8.23 | 28,800 |
| 95 | ACP-D | 11.04 | 16,000 |

SYNTHESIS EXAMPLES 96-102

1699 parts of POLYOL H were reacted with 87 parts of ISO-C at 80 °C until an NCO content of 1.3% was obtained. This prepolymer was capped with the hydroxyl-group containing amines shown in Table 15.

TABLE 15

| SYNTHESIS EXAMPLES 96-102 | | | |
|---|---|---|---|
| Example | OH-Amine | Parts OH-Amine per 200 Parts of Prepolymer | Viscosity at 60 °C |
| 96 | ACP-A | 8.8 | 18,333 |
| 97 | ACP-D | 27.9 | 20,333 |
| 98 | ACP-E | 14.2 | 18,667 |
| 99 | ACP-F | 21.3 | 18,733 |
| 100 | ACP-I | 28.3 | 16,867 |
| 101 | ACP-J | 34.0 | 16,133 |
| 102 | ACP-L | 28.5 | 23,267 |

SYNTHESIS EXAMPLES 103-109

1450 parts of POLYOL I were reacted with 87 parts of ISO-B at 60 °C to an NCO content of 1.36%. This prepolymer was then capped with the hydroxyl-group containing amines listed in Table 16.

TABLE 16

| SYNTHESIS EXAMPLES 103-109 | | | |
|---|---|---|---|
| Example | OH-Amine | Parts OH-Amine per 150 Parts of Prepolymer | Viscosity at 60 °C |
| 103 | ACP-A | 7.3 | 20,000 |
| 104 | ACP-D | 22.9 | 15,267 |
| 105 | ACP-E | 11.7 | 20,600 |
| 106 | ACP-F | 17.6 | 27,000 |
| 107 | ACP-I | 23.3 | 24,800 |
| 108 | ACP-J | 28.0 | 19,087 |
| 109 | ACP-L | 23.4 | 20,800 |

SYNTHESIS EXAMPLES 110-116

1000 parts of POLYOL J were reacted with 69.6 parts of ISO-B at 80°C to an NCO content of 1.07%. This prepolymer was capped with the hydroxyl-group containing amines in Table 17.

TABLE 17

| SYNTHESIS EXAMPLES 110-116 | | | |
|---|---|---|---|
| Example | OH-Amine | Parts OH-Amine per 150 Parts of Prepolymer | Viscosity at 60°C |
| 110 | ACP-A | 7.14 | 6933 |
| 111 | ACP-D | 22.5 | 8200 |
| 112 | ACP-E | 11.5 | 8000 |
| 113 | ACP-F | 17.2 | 10,200 |
| 114 | ACP-I | 22.9 | 6933 |
| 115 | ACP-J | 27.5 | 8667 |
| 116 | ACP-L | 23.0 | 24,000 |

SYNTHESIS EXAMPLES 117-123

2000 parts of POLYOL F were reacted with 87 parts of ISO-B at 60°C to an NCO content of 1.00%. This prepolymer was capped with the hydroxyl-group containing amines listed in Table 18.

TABLE 18

| SYNTHESIS EXAMPLES 117-123 | | | |
|---|---|---|---|
| Example | OH-Amine | Parts OH-Amine per 200 Parts of Prepolymer | Viscosity at 60°C |
| 117 | ACP-A | 7.14 | 14,000 |
| 118 | ACP-D | 22.5 | 14,400 |
| 119 | ACP-E | 11.5 | 13,933 |
| 120 | ACP-F | 17.2 | 17,533 |
| 121 | ACP-I | 22.9 | 18,400 |
| 122 | ACP-J | 27.5 | 14,067 |
| 123 | ACP-L | 23.0 | 34,267 |

SYNTHESIS EXAMPLES 124-131

2000 parts of POLYOL A were reacted with 133 parts of ISO-B to an NCO content of 0.97% NCO. This prepolymer was capped with the hydroxyl-group containing amines listed in Table 19.

TABLE 19

| SYNTHESIS EXAMPLES 124-131 | | | |
|---|---|---|---|
| Example | OH-Amine | Parts OH-Amine per 200 Parts of Prepolymer | Viscosity at 60 °C |
| 124 | ACP-C | 12.38 | 8133 |
| 125 | ACP-M | 17.02 | 4267 |
| 126 | ACP-N | 12.55 | 8533 |
| 127 | ACP-B | 4.19 | 27,733 |
| 128 | ACP-O | 6.37 | 22,667 |
| 129 | ACP-K | 5.67 | 7000 |
| 130 | ACP-H | 9.70 | 13,667 |
| 131 | ACP-P | 8.97 | 26,607 |

SYNTHESIS EXAMPLES 132-136

1600 parts of POLYOL B were reacted with 111.1 parts of ISO-A at 100 °C until an NCO content of 1.3% was obtained. The prepolymer was capped with the hydroxyl-group containing amines listed in Table 20.

TABLE 20

| EXAMPLES 132-136 | | | |
|---|---|---|---|
| Example | OH-Amine | Parts OH-Amine per 190 Parts of Prepolymer | Viscosity at 29 °C |
| 132 | ACP-A | 8.27 | 4783 |
| 133 | ACP-D | 26.1 | 6000 |
| 134 | ACP-F | 19.9 | 6067 |
| 135 | ACP-I | 26.5 | 6533 |
| 136 | ACP-E | 13.3 | 4287 |

SYNTHESIS EXAMPLES 137-141

1600 parts of POLYOL B were reacted with 131 parts of ISO-E at 120 °C until an NCO content of 1.3% was obtained. The prepolymer was capped with the hydroxyl-group containing amines in Table 21.

TABLE 21

| EXAMPLES 137-141 | | | |
|---|---|---|---|
| Example | OH-Amine | Parts OH-Amine per 190 Parts of Prepolymer | Viscosity at 25 °C |
| 137 | ACP-E | 13.2 | 5183 |
| 138 | ACP-F | 19.8 | 8283 |
| 139 | ACP-I | 26.2 | 5467 |
| 140 | ACP-A | 8.18 | 7867 |
| 141 | ACP-D | 25.8 | 19,300 |

SYNTHESIS EXAMPLES 142-148

1600 parts of POLYOL B were reacted with 185.9 parts of ISO-F at 60 °C to an NCO content of 1.33%. The prepolymer was capped with hydroxyl-group containing amines in Table 22.

TABLE 22

| EXAMPLES 142-148 | | | | |
|---|---|---|---|---|
| Example | OH-Amine | Parts OH-Amine per 200 Parts of Prepolymer | Visc. at 25 °C | Visc. at 60 °C |
| 142 | ACP-E | 13.4 | 54,933 | 4817 |
| 143 | ACP-F | 20.2 | 90,533 | 12,033 |
| 144 | ACP-I | 26.7 | 81,333 | 9617 |
| 145 | ACP-A | 8.34 | 57,200 | 6833 |
| 146 | ACP-D | 26.3 | 40,400 | 5200 |
| 147 | ACP-J | 32.1 | 91,600 | 8633 |
| 148 | ACP-L | 26.9 | 170,000 | 15,733 |

SYNTHESIS EXAMPLES 149-153

1600 parts of POLYOL B were reacted with 143.4 parts of ISO-G at 60 °C to an NCO content of 1.27% NCO. This prepolymer was capped with the hydroxyl-group containing amines of Table 23.

TABLE 23

| EXAMPLES 149-153 | | | |
|---|---|---|---|
| Example | OH-Amine | Parts OH-Amine per 190 Parts of Prepolymer | Visc. at 60 °C |
| 149 | ACP-E | 13.1 | 7283 |
| 50 | ACP-K | 8.78 | 8850 |
| 151 | ACP-O | 9.88 | 11,317 |
| 152 | ACP-A | 8.12 | 10,117 |
| 153 | ACP-D | 25.6 | 11,967 |

SYNTHESIS EXAMPLES 154-159

980 parts of POLYOL K were reacted with 85 parts of ISO-B at 60 °C to an NCO content of 2.2%. The prepolymer was capped with the hydroxyl-group containing amines in Table 24.

TABLE 24

| EXAMPLES 154-159 | | | |
|---|---|---|---|
| Example | OH-Amine | Parts OH-Amine per 190 Parts of Prepolymer | Visc. at 60° C |
| 154 | ACP-E | 16.6 | 7000 |
| 155 | ACP-F | 24.2 | 7600 |
| 156 | ACP-J | 39.6 | 6500 |
| 157 | ACP-L | 33.2 | 13,300 |
| 158 | ACP-A | 10.3 | 5900 |
| 159 | ACP-D | 32.4 | 4500 |

SYNTHESIS EXAMPLES 160-166

2000 parts of POLYOL D were reacted with 174 parts of ISO-C at 60° C to an NCO content of 2.06% NCO. The prepolymer was capped with the hydroxyl-group containing amines in Table 25.

TABLE 25

| EXAMPLES 160-166 | | | |
|---|---|---|---|
| Example | OH-Amine | Parts OH-Amine per 200 Parts of Prepolymer | Visc. at 25° C |
| 160 | ACP-E | 22.1 | 13,783 |
| 161 | ACP-F | 33.1 | 22,417 |
| 162 | ACP-I | 43.9 | 21,433 |
| 163 | ACP-J | 52.8 | 14,767 |
| 164 | ACP-L | 44.2 | 33,650 |
| 165 | ACP-A | 13.7 | 15,467 |
| 166 | ACP-D | 43.2 | 10,583 |

SYNTHESIS EXAMPLE 167

8000 parts of POLYOL A were reacted with 501 parts of ISO-H at 60° C to an NCO content of 0.85% NCO. This was capped with 720 parts of ACP-F. A prepolymer polyol with a viscosity of 18,383 at 25° C resulted.

SYNTHESIS EXAMPLE 168

8000 parts of POLYOL A were reacted with 501 parts of ISO-H at 60° C to an NCO content of 0.98% NCO. This was capped with a mixture of 285 parts of zinc stearate in 720 parts of ACP-F. The resultant prepolymer polyol had a viscosity of 43,017 at 25° C.

SYNTHESIS EXAMPLE 169

8000 parts of POLYOL A were reacted with 501 parts of ISO-I at 70° C to an NCO content of 1.0%. This was capped with 720 parts of ACP-F to yield a prepolymer polyol with a viscosity of 12,800 at 25° C.

SYNTHESIS EXAMPLE 170

8000 parts of POLYOL A were reacted with 501 parts of ISO-I to an NCO content of 1.046%. This was capped with a mixture of 285 parts zinc stearate in 720 parts of ACP-F. The resultant prepolymer polyol had a viscosity of 33,650 at 25° C.

SYNTHESIS EXAMPLE 171

8000 parts of POLYOL A were reacted with 524 parts of ISO-E at 110° C to an NCO content of 0.99%. This was capped with 720 parts of ACP-F to yield a prepolymer polyol with a viscosity of 9617 at 25° C.

SYNTHESIS EXAMPLE 172

8000 parts of POLYOL A were reacted with 524 parts of ISO-E at 110° C to an NCO content of 1.02% NCO. This was capped with a mixture of 286 parts of zinc stearate in 720 parts of ACP-F to yield a prepolymer polyol with a viscosity of 11,067 at 25° C.

SYNTHESIS EXAMPLE 173

8000 parts of POLYOL A were reacted with 445 parts of ISO-A at 110° C to an NCO content of 1.00% NCO. This was capped with 720 parts of ACP-F to yield a prepolymer polyol with a viscosity of 5800 at 25° C.

SYNTHESIS EXAMPLE 174

8000 parts of POLYOL A were reacted with 445 parts of ISO-A at 110° C to an NCO content of 0.99% NCO. This was capped with a mixture of 283 parts zinc stearate in 720 parts of ACP-F to yield a prepolymer polyol with a viscosity of 10,250 at 25° C.

SYNTHESIS EXAMPLE 175

8000 parts of POLYOL A were reacted with 348 parts of ISO-B at 60° C to an NCO content of 1.05%. This was capped with 960 parts of ACP-Q to yield a prepolymer polyol with a viscosity of 10,267 at 25° C.

SYNTHESIS EXAMPLE 176

8000 parts of POLYOL A were reacted with 348 parts of ISO-C at 60° C to an NCO content of 1.02%. This was capped with 960 parts of ACP-Q to yield a prepolymer polyol with a viscosity of 9867 at 25° C.

SYNTHESIS EXAMPLE 177

6400 parts of POLYOL L were reacted with 348 parts of ISO-C at 60° C to an NCO content of 1.33% NCO. This was capped with 960 parts of ACP-Q to yield a prepolymer polyol with a viscosity of 34,517 at 25° C.

SYNTHESIS EXAMPLE 178

8000 parts of POLYOL A were reacted with 523.6 parts of ISO-J at 80° C to an NCO content of 0.965% NCO. This was capped with 480 parts of ACP-E to yield a prepolymer polyol with a viscosity of 18,617 at 25° C.

SYNTHESIS EXAMPLE 179

1200 parts of POLYOL L were reacted with 62.6 parts of ISO-I at 60°C to an NCO content of 0.905% NCO. This was capped with 90 parts of ACP-F to yield a prepolymer polyol with a viscosity of 6583 at 29°C.

SYNTHESIS EXAMPLE 180

4800 parts of POLYOL L were reacted with 296 parts of octadecyl isocyanate at 120°C until no NCO band could be detected by infrared spectroscopy. 174 parts of ISO-C wre reacted at 60°C to an NCO content of 0.81%. This was capped with 360 parts of ACP-F to yield a prepolymer polyol with a viscosity of 11,733 at 25°C.

SYNTHESIS EXAMPLE 181

400 parts of POLYOL A were reacted with 87 parts of ISO-C at 80°C to an NCO content of 6.75% NCO. This prepolymer was capped with 192 parts of ACP-E to yield a prepolymer polyol with a viscosity of 231,333 at 25°C.

SYNTHESIS EXAMPLE 182

4000 parts of POLYOL A was mixed with 4000 parts of POLYOL C. To this mixture was added 348 parts of ISO-C. This was reacted at 80°C to an NCO content of 1.04% NCO. This was capped with a mixture of 280 parts zinc stearate in 720 parts ACP-F to yield a final viscosity of 17,887 at 25°C.

SYNTHESIS EXAMPLE 183

800 parts of POLYOL E were reacted with 348 parts of ISO-C at 60°C until an NCO content of 1.18% was obtained. To this was added with stirring a solution consisting of 358.8 parts ACP-F, 239.2 parts ACP-E and 274.0 parts of zinc stearate. After consumption of the NCO groups the viscosity at 25°C was 23,533.

EXAMPLES 184-189

2000 parts of POLYOL G were reacted with 174 parts of ISO-B at 60°C until an NCO content of 1.9% was obtained. To 240 parts of this prepolymer were added each of the hydroxyl-group containing amines in Table 26. Viscosities were measured after no NCO band could be detected by infrared spectroscopy.

TABLE 26

| EXAMPLES 184-189 | | | |
|---|---|---|---|
| Examples | OH-Amine | Parts OH-Amine per 240 Parts of Prepolymer | Visc. at 25°C |
| 184 | ACP-A | 16.45 | 7867 |
| 185 | ACP-D | 51.89 | 4533 |
| 186 | ACP-E | 26.49 | 3933 |
| 187 | ACP-I | 52.71 | 12,133 |
| 188 | ACP-J | 60.68 | 7800 |
| 189 | ACP-L | 53.03 | 12,733 |

SYNTHESIS EXAMPLE 190

8000 parts of POLYOL E were reacted with 348 parts of ISO-C at 60°C until an NCO content of 1.22% was obtained. To this was added 476 parts of ACP-E with stirring. After the NCO was consumed the final viscosity was 14,667 at 25°C.

SYNTHESIS EXAMPLES 191-195

2000 parts of POLYOL A were reacted with 111.1 parts of ISO-A at 120°C to an NCO content of 0.99%. The prepolymer was cooled to 80°C and 87 parts of ISO-B were added. A prepolymer having an NCO content of 1.97% was obtained. The resultant product was capped with the hydroxyl-group containing amines in Table 27.

TABLE 27

| EXAMPLES 191-195 | | | | |
|---|---|---|---|---|
| Examples | OH-Amine | Parts OH-Amine per 400 Parts of Prepolymer | Visc. | |
| | | | 25°C | 60°C |
| 191 | ACP-A | 27.1 | 132,200 | 15,697 |
| 192 | ACP-D | 95.0 | 75,600 | 13,387 |
| 193 | ACP-R | 93.2 | 219,600 | 34,617 |
| 194 | ACP-E | 43.7 | 78,250 | 9,957 |
| 195 | ACP-F | 65.6 | 217,600 | 23,417 |

SYNTHESIS EXAMPLE 196

8000 parts of POLYOL A were reacted with 523.6 parts of ISO-J at 80°C to an NCO content of 1.0%. This was capped with 298 parts of ACP-A to yield a prepolymer polyol with a viscosity of 33,400 at 25°C.

SYNTHESIS EXAMPLE 197

480 parts of POLYOL L were reacted with 26.1 parts of ISO-J at 80°C until an NCO content of 0.87% was obtained. This prepolymer was capped with 14.9 parts of ACP-A to yield a prepolymer polyol with a viscosity of 18,067 at 25°C.

SYNTHESIS EXAMPLE 198

480 parts of POLYOL L were reacted with 32.6 parts of ISO-J at 80°C until an NCO content of 0.93% NCO was obtained. This prepolymer was capped with 18.6 parts of ACP-A to yield a prepolymer polyol with a viscosity of 52,267 at 25°C.

SYNTHESIS EXAMPLE 199

480 parts of POLYOL L were reacted with 39.2 parts of ISO-J at 80°C to an NCO content of 1.22%. This prepolymer was capped with 22.4 parts of ACP-A to yield a prepolymer polyol with a viscosity of 245,333 at 25°C.

EXAMPLE 200

RIM test panels were made using a laboratory RIM machine and one of the polyols of the present invention. Test panels were made with mold dimensions of 4 mm x 200 mm x 300 mm. Shot time was 0.8 seconds with a throughput of 331 gms/sec. Injection pressures were 180 bar for both polyol and isocyanate streams. The polyol stream temperature was 60°C and the isocyanate stream temperature was 40°C. The mold temperature was 60°C. Demold time was 45 seconds. Panels were post-cured for one hour at 125°C before physical testing. The mixhead used was a Hennecke MQ-8 mixhead. Metering was done by displacement cylinders driven by linear amplifiers. The formulation and test results were as indicated in Table 28. Runs B and C were comparative runs.

TABLE 28

| POLYOL STREAM | A | B | C |
|---|---|---|---|
| Product of Ex. 87 | 69 | - | - |
| POLYOL B | - | 60.04 | 59.84 |
| ACP-F | - | 6.4 | 6.4 |
| Zinc Stearate | - | 2.6 | 2.6 |
| Diethyltoluene diamine | 30 | 30 | 30 |
| L5430 - Union Carbide Surfactant | 1 | 1 | 1 |
| Dibutyltin dilaurate | - | - | 0.1 |
| Triethylenediamine | - | - | 0.1 |
| ISO STREAM | | | |
| ISO-L | 99.6 | 108.7 | 108.7 |
| PROPERTIES | | | |
| Density, g/cm$^3$ (ASTM D-1622) | 1.085 | 1.086 | 1.091 |
| Flex Mod., N/mm$^2$ (ASTM D-790) | 562.1 | 485.1 | 459.2 |
| Ultimate Elongation, % (ASTM D-638) | 90 | 70 | 50 |
| Notched Izod Impact, N-mm/mm (ASTM D-256) | 250 | 231 | 279 |
| 10 cm, 325°F 1 hr. heat sag, mm (ASTM D-3769) | 6.5 | 7.2 | 6.8 |
| 15 cm, 275°F 1 hr. heat sag, mm (ASTM D-3769) | 7.5 | 10.7 | 10.7 |
| Green Strength | Excellent | Poor | Poor |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A hydroxyl-group containing material comprising the reaction product of

a) an isocyanate group containing material having an isocyanate group content of from about 0.5 to about 8% by weight produced by reacting

i) an organic di- and/or polyisocyanate, and

ii) an organic hydroxyl-group containing material having from 1 to 8 hydroxy groups and having a molecular weight of from about 1800 to about 10,000, and

b) a sufficient amount of a hydroxyl-group containing amine to react with all the isocyanate groups of component a), said amine characterized as (i) containing from 2 to 8 hydroxyl groups, (ii) containing at least one tertiary amine group, (iii) containing no primary amine groups, and (iv) having a molecular weight of from about 120 to about 1000.

2. The composition of Claim 1 wherein said hydroxyl-group containing material a)ii) has from 2 to 8 hydroxyl groups.

3. The composition of Claim 2 wherein said hydroxyl-group containing material a)ii) has from 2 to 4 hydroxyl groups.

4. The composition of Claim 2 wherein said material a)ii) has a molecular weight of from 2000 to 6000.

5. The composition of Claim 4 wherein said material a)ii) has a molecular weight of from 4000 to 6000.

6. The composition of Claim 1 wherein said isocyanate group content is from 0.8 to 3 percent by weight.

7. The composition of Claim 6 wherein said isocyanate group content is from 1 to 2 percent by weight.

8. The composition of Claim 1 wherein said amine contains from 2 to 6 hydroxyl groups.

9. The composition of Claim 1 wherein said amine contains no secondary amine groups.

10. A process for preparing a molded part via the RIM process by reacting an isocyanate, one or more high molecular weight active hydrogen containing materials and one or more low molecular weight active hydrogen containing materials, in a closed mold characterized in that said high molecular weight active hydrogen containing material comprises

a) an isocyanate group containing material having an isocyanate group content of from about 0.5 to about 8% by weight produced by reacting

i) an organic di- and/or polyisocyanate, and

ii) an organic hydroxyl-group containing material having from 1 to 8 hydroxy groups and having a molecular weight of from about 1800 to about 10,000, and

b) a sufficient amount of a hydroxyl-group containing amine to react with all the isocyanate groups of component a), said amine characterized as (i) containing from 2 to 8 hydroxyl groups, (ii) containing at least one tertiary amine group, (iii) containing no primary amine groups, and (iv) having a molecular weight of from about 120 to about 1000.